# EUROPÄISCHE PATENTSCHRIFT

(11) **EP 1 094 235 B1**
(45) Veröffentlichungstag und Bekanntmachung des Hinweises auf die Patenterteilung: **25.08.2004**
(21) Anmeldenummer: 00122914.5
(22) Anmeldetag: 20.10.2000
(51) Int. Cl.: F16D 59/02, F16D 55/28

(54) **Bremsvorrichtung für ein Fahrzeug**
Braking device for a vehicle
Dispositif de freinage pour un véhicule

(30) Priorität: 22.10.1999 DE 19951037
(43) Veröffentlichungstag der Anmeldung: 25.04.2001
(73) Patentinhaber: STILL S.A.R.L., 77100 Meaux (FR)
(72) Erfinder: Alegre, Jean Pierre, 60150 Thourotte (FR)
(74) Vertreter: Kasseckert, Rainer

(56) Entgegenhaltungen:
- DE-A- 1 475 457
- DE-A- 2 105 813
- DE-A- 4 329 542
- US-A- 5 796 192

## Beschreibung

Die Erfindung betrifft eine Bremsvorrichtung für ein Fahrzeug mit einer Speicherbremse, die ein nicht bewegbares Bremsengehäuse, einen Bremsrotor und einen in Richtung der Rotationsachse des Bremsrotors bewegbaren Bremskörper aufweist, wobei der Bremskörper mittels eines Bremslüfters entgegen der Kraft eines Kraftspeichers von dem Bremsrotor lösbar ist und ein von dem Bremslüfter unabhängiges Mittel zum Lösen der Bremskörpers vorgesehen ist.

Bremsvorrichtungen der genannten Art werden insbesondere in Nutzfahrzeugen, Arbeitsmaschinen oder Flurförderzeugen eingesetzt. Der Bremsrotor ist hierbei mit einem rotierenden Bauteil des Antriebsstrangs des Fahrzeugs verbunden. Bei elektrisch angetriebenen Fahrzeugen kann der Bremsrotor beispielsweise an den Läufer eines elektrischen Antriebsmotors gekoppelt sein. Der Bremsrotor kann beispielsweise als Bremsscheibe oder als Lamellenpaket ausgeführt sein. Bei betätigter Speicherbremse ist der Bremskörper in axialer Richtung an den Bremsrotor angedrückt, wobei der Bremskörper an einem nicht bewegbaren Bremskörper vor Verdrehen gesichert ist. Die auf den Bremskörper wirkende Druckkraft wird mittels eines Kraftspeichers erzeugt, der häufig von mehreren Druckfeder gebildet wird. Der zum Lösen der Speicherbremse vorgesehene Bremslüfter ist ausschließlich während des Betriebs des Fahrzeugs betätigbar. Bekannt ist es beispielsweise, als Bremslüfter einen Elektromagnet oder einen Hydraulikzylinder vorzusehen, wobei die zum Betätigen des Bremslüfters benötigte elektrische bzw. hydraulische Energie von einem Antriebssystem des Fahrzeugs zur Verfügung gestellt wird.

Zum Durchführen von Wartungsarbeiten kann es erforderlich sein, die Speicherbremse unabhängig von der Versorgung mit elektrischer oder hydraulischer Energie und damit unabhängig von der Funktion des Bremslüfters zu lösen. Hierfür ist ein von dem Bremslüfter getrenntes Mittel zum Lösen der Speicherbremse vorgesehen, das in der Regel manuell betätigbar ist. Die Bedienung von bekannten, vom Bremslüfter unabhängigen Mitteln zum Lösen der Speicherbremse erfordert einen erheblichen Werkzeug- und Arbeitsaufwand.

Aus der DE 1 475 457 ist eine Vorrichtung bekannt, bei der das vom Bremslüfter unabhängige Mittel zum Lösen der Speicherbremse als in der Mittelachse des Bremskörpers angeordnete Stange ausgeführt ist. Die Stange ist mit dem Bremskörper über ein Gewinde verbunden und am anderen Ende mit einem Griffstück versehen, so dass durch Drehen der Stange mittels des Griffstücks das Lösen der Bremse bewirkt wird. Ein derartiger Bremskörper muss jedoch ausreichend stark dimensioniert werden, um die durch die Stange an nur einer Stelle eingeleitete Kraft aufnehmen zu können. Das in der DE 1 475 457 gezeigte Griffstück ist nicht gegen unbeabsichtigtes Verdrehen gesichert und erlaubt bei einer konzentrischen Anordnung von Bremskörper und Bremsrotor keine Durchführung der Rotorwelle durch den Bremskörper.

Der Erfindung liegt daher die Aufgabe zugrunde, eine Bremsvorrichtung für ein Fahrzeug zur Verfügung zu stellen, bei dem das Mittel zum Lösen der Speicherbremse einfach aufgebaut und in einfacher Weise betätigbar ist, wobei die Nachteile von Bremsvorrichtungen nach dem Stand der Technik vermieden werden.

Diese Aufgabe wird erfindungsgemäß dadurch gelöst, daß das von dem Bremslüfter unabhängige Mittel zum Lösen der Speicherbremse mindestens zwei Stangen aufweist, die mittels jeweils eines Gewindeabschnitts mit dem Bremskörper verbindbar sind und in zumindest einer axialen Richtung gegenüber dem Bremsengehäuse festlegbar sind. Die Stangen sind vorteilhafterweise aus Metall ausgeführt und mit den Gewindeabschnitten in entsprechende Gewindebohrungen des Bremskörpers eingeschraubt. Durch Drehen der Stangen wird der Bremskörper mittels der Gewinde entgegen der Kraft des Kraftspeichers bewegt, wobei die Stangen an dem Bremsengehäuse in axialer Richtung festgelegt sind. Vorteilhafterweise sind die mindestens zwei Stangen symmetrisch zu einer Mittelachse des Bremskörpers angeordnet, wodurch eine einseitige Krafteinleitung vermieden wird.

Gemäß einer zweckmäßigen Ausgestaltungsform weist das Bremsengehäuse mindestens zwei Durchgangsbohrungen auf und sind die Stangen teilweise innerhalb der Durchgangsbohrungen angeordnet. Die Stangen sind durch die Durchgangsbohrungen im Bremsengehäuse gesteckt, wobei die Stangen auf der einen Seite des Bremsengehäuses in den Bremskörper eingeschraubt sind. Auf der anderen Seite des Bremsengehäuses sind die Stangen mit einer geeigneten Vorrichtung gegenüber dem Bremsengehäuse festgelegt. Die Stangen weisen auf der dem Bremskörper entgegengesetzten Seite des Bremsengehäuses jeweils einen Anschlag auf, der in Querrichtung der Stangen eine größere Abmessung aufweist, als der Durchmesser der jeweiligen Durchgangsbohrung. Das Festlegen der Position der Stangen gegenüber dem Bremsengehäuse erfolgt somit mittels des Anschlags, mit dem eine gegebenenfalls auf die Stangen wirkende Zugkraft an dem Bremsengehäuse abgestützt wird.

Bei nicht betätigtem Mittel zum Lösen der Speicherbremse ist zwischen dem Anschlag und dem Bremsengehäuse ein Spalt vorhanden. Die Stangen und damit der Bremskörper können dabei in jeder axialen Richtung gegenüber dem Bremsengehäuse bewegt werden. Die Funktion der Speicherbremse wird in dieser Betriebssituation von dem Mittel zum Lösen der Speicherbremse nicht beeinflußt.

Dagegen liegt bei betätigtem Mittel zum Lösen der Speicherbremse der Anschlag an dem Bremsengehäuse an. Hierdurch kann über die Stangen eine Kraft auf den Bremskörper ausgeübt und die Speicherbremse gelöst werden.

Vorteilhafterweise ist das Mittel zum Lösen der Speicherbremse durch Drehen der Stangen um ihre Längsachse, vorzugsweise um einen Winkelbetrag von ca. 270 Grad, betätigbar. Bei einem Drehen der Stangen im Uhrzeigersinn schrauben sich die Stangen in den Bremskörper hinein, wodurch der Bremskörper zum Bremsengehäuse hin gezogen wird. Die Steigung des Gewindeabschnitts ist vorteilhafterweise so gewählt, daß ein Drehwinkel von 240 bis 300 Grad, vorzugsweise von genau 270 Grad genügt, um den zwischen dem Bremsengehäuse und dem Anschlag vorhandenen Spalt zu überbrücken und den Bremskörper von dem Bremsrotor zu lösen. Der genannte Drehwinkel von ca. 270 Grad ist besonders vorteilhaft, weil er ein Lösen der Bremse mit nur einem Handgriff ermöglicht. Darüber hinaus ist an der Drehstellung der Stangen mit einem Blick erkennbar, ob sich die Speicherbremse in betätigtem oder gelöstem Zustand befindet.

Eine besonders wartungsfreundliche Anordnung liegt vor, wenn die Stangen während des Betriebs der Bremsvorrichtung jederzeit mit dem Bremskörper verbunden sind. Die Stangen werden also während des normalen Betriebs nicht entfernt und ist stets in den Bremskörper eingeschraubt. Zum Lösen der Speicherbremse ist daher kein Werkzeug erforderlich, insbesondere befinden sich die Stangen stets an der Bremse.

Um ein manuelles Drehen der Stangen zu ermöglichen, weisen die Stangen jeweils einen Griffabschnitt auf, der zumindest teilweise von der Längsachse der Stangen beabstandet ist. Zum Drehen der Stangen ist somit kein Werkzeug erforderlich.

Besonders vorteilhaft ist es, wenn mindestens zwei Stangen vorgesehen sind, deren Griffabschnitte mittels eines Sicherungselements derart verbindbar sind, daß ein Drehen der Stangen um ihre Längsachsen verhindert ist. Das Sicherungselement stellt während des normalen Betriebs der Bremsvorrichtung sicher, daß das von dem Bremslüfter unabhängige Mittel zum Lösen der Speicherbremse nicht unabsichtlich oder selbsttätig betätigt wird.

Bei nicht betätigtem Mittel zum Lösen der Speicherbremse sind, bezüglich einer Ansicht in axialer Blickrichtung, die Griffabschnitte innerhalb der äußeren Kontur des Bremsengehäuses angeordnet. Die Baugröße der Bremsvorrichtung in radialer Richtung wird somit durch die Griffabschnitte der Stangen nicht vergrößert.

Ebenso vorteilhaft ist es, wenn bei betätigtem Mittel zum Lösen der Speicherbremse, bezüglich einer Ansicht in axialer Blickrichtung, die Griffabschnitte innerhalb der äußeren Kontur des Bremsengehäuses angeordnet sind.

Weitere Vorteile und Einzelheiten der Erfindung werden anhand des in den schematischen Figuren dargestellten Ausführungsbeispiels näher erläutert. Dabei zeigt
- Fiaur 1: eine erfindungsgemäße Bremsvorrichtung im Querschnitt,
- Figur 2: die Bremsvorrichtung in frontaler Ansicht,
- Figur 3: die Bremsvorrichtung bei gelöster Speicherbremse.

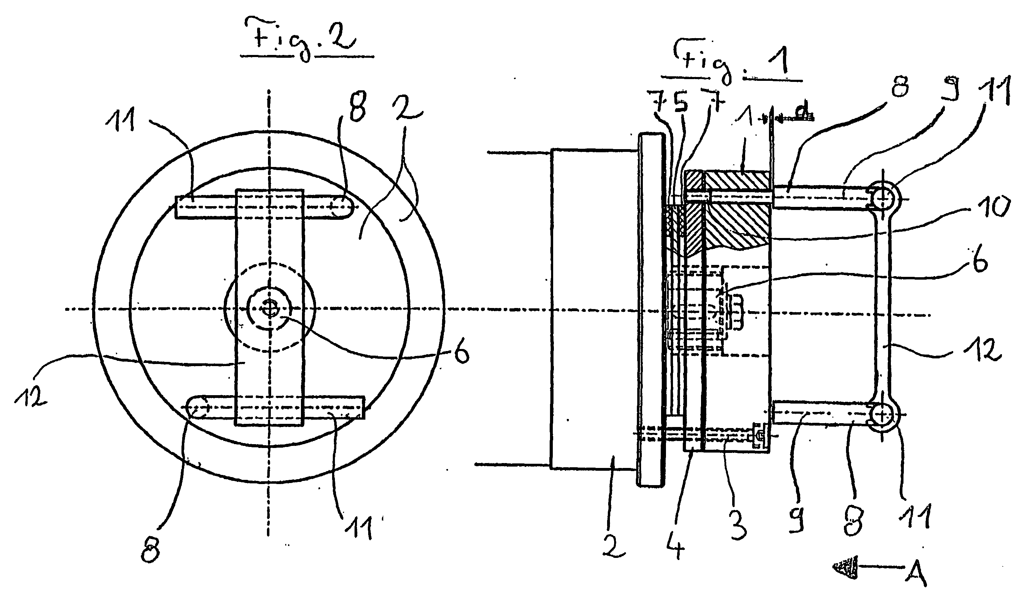

Figur 1 zeigt eine erfindungsgemäße Bremsvorrichtung. Ein Bremsengehäuse 1 ist mittels einer Schraubenverbindung 3 mit dem Gehäuse 2 eines Elektromotors verbunden. Ein Bremskörper 4 ist relativ zu dem Bremsengehäuse 1 in axialer Richtung verschiebbar und ist gegenüber dem Bremsengehäuse 1 vor Verdrehen gesichert. Zwischen dem Gehäuse 2 des Elektromotors und dem Bremskörper 4 ist ein scheibenförmiger Bremsrotor 5 angeordnet, der drehstarr mit einer Welle 6 des Elektromotors verbunden ist. An beiden Seitenflächen des Bremsrotors 5 sind in diesem Ausführungsbeispiel ringförmige Bremsbeläge 7 befestigt, die bei einem Bremsvorgang an dem Bremskörper 4 bzw. an einem entsprechend ausgebildeten Teil des Gehäuses 2 des Elektromotors zur Anlage kommen. Gemäß einer alternativen Ausführungsform ist es möglich, die Bremsbeläge 7 an dem Bremskörper 4 bzw. an dem Gehäuse 2 zu befestigen, wobei dann der Bremsrotor 5 relativ zu den Bremsbelägen 7 rotiert. In dem Bremsengehäuse 1 sind ein nicht dargestellter Kraftspeicher und ein ebenfalls nicht dargestellter Bremslüfter angeordnet. Der Kraftspeicher kann beispielsweise von mehreren Metallfedern gebildet sein, die auf den Bremskörper 4 eine Kraft in Richtung des Bremsrotors 5 ausüben. Mit der von dem Kraftspeicher erzeugten Kraft stützt sich der Bremskörper 4 über den Bremsrotor 5 und die Bremsbeläge 7 an dem Gehäuse 2 ab, wodurch der rotierende Bremsrotor 5 gegenüber dem Bremsengehäuse 1 und dem Gehäuse 2 des Elektromotors abgebremst wird. Mit dem Bremslüfter, der in der Regel als Elektromagnet oder als Hydraulikzylinder ausgeführt ist, kann der Bremskörper 4 entgegen der Kraft des Kraftspeichers an das Bremsengehäuse 1 herangezogen werden, wodurch die Bremse gelöst wird.

Erfindungsgemäß sind zwei Stangen 8 vorgesehen, die mit einem Gewindeabschnitt 10 in den Bremskörper 4 eingeschraubt sind. Die Stangen 8 sind in Durchgangslöchem geführt, die in dem Bremsengehäuse 1 angeordnet sind. Weiter weisen die Stangen 8 jeweils einen als Absatz ausgebildeten Anschlag auf, wobei in der in Fig. 1 dargestellten Position zwischen der Oberfläche des Bremsengehäuses 1 und dem Anschlag ein Abstand d vorhanden ist. Durch den Abstand d ist sichergestellt, daß der Bremskörper 4 relativ zu dem Bremsengehäuse 1 in axialer Richtung bewegbar ist, so daß die Speicherbremse mittels des Kraftspeichers betätigbar und mittels des Bremslüfters lösbar ist. Der Abstand d ist dabei derart bemessen, daß eine sichere Funktion der Speicherbremse auch nach einer verschleißbedingten Abnutzung der Bremsbeläge 7 gewährleistet ist.

Mittels der Stangen 8 kann die Bremse unabhängig von der Funktion des Bremslüfters gelöst werden. Hierzu werden die Stangen 8 um ihre Längsachsen 9 in dem Drehsinn gedreht, bei der die Stangen 8 in den Bremskörper hineingeschraubt werden, wobei sich zunächst die Stangen nach in der Zeichnung links bewegen, bis der Anschlag an der Oberfläche des Bremsengehäuses 1 zur Anlage kommt. Wenn daraufhin die Stangen 8 mit dem selben Drehsinn weitergedreht werden, wird der Bremskörper 4 nach in der Zeichnung rechts in Richtung des Bremsengehäuses 1 gezogen. Die Speicherbremse wird somit unabhängig von der Funktionsfähigkeit des Bremslüfters gelöst. Die Steigung des Gewindeabschnitts 10 ist im vorliegenden Ausführungsbeispiel derart bemessen, daß für das oben beschriebene Lösen der Speicherbremse ein Drehen der Stangen 8 um jeweils 270 Grad ausreicht. Die Stangen 8 weisen an dem in der Zeichnung rechten Ende Griffabschnitte 11 auf, die sich senkrecht zu den Längsachsen 9 erstrecken. Mit einem Sicherungselement 12 können die Griffabschnitte 11 der beiden Stangen 8 miteinander verbunden werden, womit die Stangen 8 in ihrer momentanen Drehstellung gesichert werden können. Das Sicherungselement ist im vorliegenden Ausführungsbeispiel aus Kunststoff ausgebildet und wird mittels elastischer Verformung auf die Griffabschnitte 11 aufgesteckt.

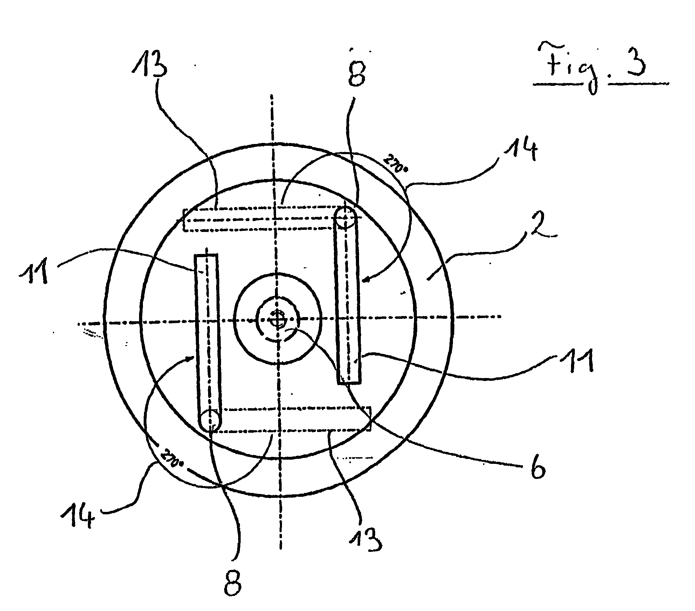

Figur 2 zeigt die erfindungsgemäße Speicherbremse in Blickrichtung A gemäß Fig. 1. Die Stangen 8 mit den Griffelementen 11 befinden sich in einer Drehstellung, in der sie den Betriebszustand der Speicherbremse nicht beeinflussen. Die Speicherbremse kann also mittels des Kraftspeichers betätigt und mittels des Bremslüfters gelöst werden. Um ein unbeabsichtigtes Verdrehen der Stangen 8 und damit ein unbeabsichtigtes Lösen der Speicherbremse zu verhindern, ist die Drehstellung der beiden Stangen 8 mit dem Sicherungselement 12 festgelegt.

Figur 3 zeigt die Speicherbremse in der selben Blickrichtung wie Figur 2. Die ursprüngliche Position der Griffelemente 11, in der der Betriebszustand der Speicherbremse durch die Stangen 8 nicht beeinflußt wird, ist mit strichpunktierten Linien 13 dargestellt. Die Pfeile 14 kennzeichnen die Drehrichtung, in der die Stangen ε zum Lösen der Speicherbremse um 270 Grad gedreht werden. In der dargestellten Position der Griffelemente 13 der Stangen 8 ist die Speicherbremse gelöst.

## Patentansprüche

1. Bremsvorrichtung für ein Fahrzeug mit einer Speicherbremse, die ein nicht bewegbares Bremsengehäuse (1), einen Bremsrotor (5) und einen in Richtung der Rotationsachse des Bremsrotors (5) bewegbaren Bremskörper (4) aufweist, wobei der Bremskörper (4) mittels eines Bremslüfters entgegen der Kraft eines Kraftspeichers von dem Bremsrotor (5) lösbar ist und ein von dem Bremslüfter unabhängiges Mittel zum Lösen der Bremskörpers (4) vorgesehen ist, **dadurch gekennzeichnet, daß** das von dem Bremslüfter unabhängige Mittel zum Lösen der Speicherbremse mindestens zwei Stangen (8) aufweist, die mittels jeweils eines Gewindeabschnitts mit dem Bremskörper (4) verbindbar sind und in zumindest einer axialen Richtung gegenüber dem Bremsengehäuse (1) festlegbar sind.

2. Bremsvorrichtung nach Anspruch 1, **dadurch gekennzeichnet, daß** das Bremsengehäuse (1) mindestens zwei Durchgangsbohrungen aufweist und die Stangen (8) teilweise innerhalb der Durchgangsbohrungen angeordnet sind.

3. Bremsvorrichtung nach Anspruch 2, **dadurch gekennzeichnet, daß** die Stangen (8) auf der dem Bremskörper (4) entgegengesetzten Seite des Bremsengehäuses (1) jeweils einen Anschlag aufweisen, der in Querrichtung der Stangen (8) eine größere Abmessung aufweist, als der Durchmesser der jeweiligen Durchgangsbohrung.

4. Bremsvorrichtung nach Anspruch 3, **dadurch gekennzeichnet, daß** bei nicht betätigtem Mittel zum Lösen der Speicherbremse zwischen dem Anschlag und dem Bremsengehäuse (1) ein Spalt (d) vorhanden ist.

5. Bremsvorrichtung nach Anspruch 3 oder 4, **dadurch gekennzeichnet, daß** bei betätigtem Mittel zum Lösen der Speicherbremse der Anschlag an dem Bremsengehäuse (1) anliegt.

6. Bremsvorrichtung nach einem der Ansprüche 1 bis 5, **dadurch gekennzeichnet, daß** das Mittel zum Lösen der Speicherbremse durch Drehen der Stangen (8) um ihre Längsachse, vorzugsweise um einen Winkelbetrag von ca. 270 Grad, betätigbar ist.

7. Bremsvorrichtung nach einem der Ansprüche 1 bis 6, **dadurch gekennzeichnet, daß** die Stangen (8) während des Betriebs der Bremsvorrichtung jederzeit mit dem Bremskörper (4) verbunden sind.

8. Bremsvorrichtung nach einem der Ansprüche 1 bis 7, **dadurch gekennzeichnet, daß** die Stangen (8) jeweils einen Griffabschnitt (11) aufweisen, der zumindest teilweise von der Längsachse der jeweiligen Stange (8) beabstandet ist.

9. Bremsvorrichtung nach einem der Ansprüche 1 bis 8, **dadurch gekennzeichnet, daß** mindestens zwei Stangen (8) vorgesehen sind, deren Griffabschnitte (11) mittels eines Sicherungselements derart verbindbar sind, daß ein Drehen der Stangen (8) um ihre Längsachsen verhindert ist.

10. Bremsvorrichtung nach einem der Ansprüche 1 bis 9, **dadurch gekennzeichnet, daß** bei nicht betätigtem Mittel zum Lösen der Speicherbremse, bezüglich einer Ansicht in axialer Blickrichtung, die Griffabschnitte (11) innerhalb der äußeren Kontur des Bremsengehäuses (1) angeordnet sind.

11. Bremsvorrichtung nach einem der Ansprüche 1 bis 10, **dadurch gekennzeichnet, daß** bei betätigtem Mittel zum Lösen der Speicherbremse, bezüglich einer Ansicht in axialer Blickrichtung, die Griffabschnitte (11) innerhalb der äußeren Kontur des Bremsengehäuses (1) angeordnet sind.

## Claims

1. Braking device for a vehicle having a storage brake, which comprises an immovable brake housing (1), a brake rotor (5) and a brake element (4) that can be moved in the direction of the axis of rotation of the brake rotor (5), it being possible for the brake element (4) to be released from the brake rotor (5) counter to the force of a force store by means of a brake release, and a means independent of the brake release being provided in order to release the brake element (4), **characterized in that** the means independent of the brake release for releasing the storage brake comprises at least two rods (8), which can be connected to the brake element (4) by means of a threaded section in each case and can be fixed in at least one axial direction with respect to the brake housing (1).

2. Braking device according to Claim 1, **characterized in that** the brake housing (1) has at least two through-holes and the rods (8) are at least partly arranged within the through-holes.

3. Braking device according to Claim 2, **characterized in that**, on the side of the brake housing (1) opposite to the brake element (4), the rods (8) each have a stop which, in the transverse direction of the rods (8) has a larger dimension than the diameter of the respective through-hole.

4. Braking device according to Claim 3, **characterized in that**, when the means of releasing the storage brake are not actuated, there is a gap (d) between the stop and the brake housing (1).

5. Braking device according to Claim 3 or 4, **characterized in that**, when the means of releasing the storage brake are actuated, the stop rests on the brake housing (1).

6. Braking device according to one of Claims 1 to 5, **characterized in that** the means of releasing the storage brake can be actuated by rotating the rods (8) about their longitudinal axis, preferably through an angular magnitude of about 270 degrees.

7. Braking device according to one of Claims 1 to 6, **characterized in that**, during the operation of the braking device, the rods (8) are connected to the brake element (4) at every time.

8. Braking device according to one of Claims 1 to 7, **characterized in that** the rods (8) in each case have a handle section (11) which is at least partly spaced apart from the longitudinal axis of the respective rod (8).

9. Braking device according to one of Claims 1 to 8, **characterized in that** at least two rods (8) are provided, whose handle sections (11) can be connected by means of a securing element in such a way that rotation of the rods (8) about their longitudinal axes is prevented.

10. Braking device according to one of Claims 1 to 9, **characterized in that**, when the means of releasing the storage brake are not actuated, the handle sections (11) are arranged within the outer contour of the brake housing (1) with respect to a view in an axial viewing direction.

11. Braking device according to one of Claims 1 to 10, **characterized in that**, when the means of releasing the storage brake are actuated, the handle sections (11) are arranged within the outer contour of the brake housing (1) with respect to a view in an axial viewing direction.

## Revendications

1. Dispositif de freinage pour un véhicule avec un frein à ressort qui présente un boîtier de frein (1) immobile, un rotor de frein (5) et un corps de frein (4) déplaçable dans la direction de l'axe de rotation du rotor de frein (5), le corps de frein (4) pouvant être détaché du rotor de frein (5) au moyen d'une soufflante de frein à l'encontre de la force d'un accumulateur de force et un moyen pour détacher le corps de frein (4) indépendant de la soufflante de frein étant prévu, **caractérisé en ce que** le moyen pour détacher le frein à ressort indépendant de la soufflante de frein présente au moins deux barres (8) qui peuvent être connectées au moyen d'une portion filetée respective au corps de frein (4) et qui peuvent être fixées dans au moins une direction axiale par rapport au boîtier de frein (1).

2. Dispositif de freinage selon la revendication 1, **caractérisé en ce que** le boîtier de frein (1) présente au moins deux alésages traversants et les barres (8) sont disposées en partie à l'intérieur des alésages traversants.

3. Dispositif de freinage selon la revendication 2, **caractérisé en ce que** les barres (8) présentent, du côté du boîtier de frein (1) opposé au corps de frein (4) à chaque fois une butée qui présente, dans la direction transversale des barres (8), une dimension plus importante que le diamètre de l'alésage traversant respectif.

4. Dispositif de freinage selon la revendication 3, **caractérisé en ce que** lorsque le moyen pour détacher le frein à ressort n'est pas actionné, il existe une fente (d) entre la butée et le boîtier de frein (1).

5. Dispositif de freinage selon la revendication 3 ou 4, **caractérisé en ce que** lorsque le moyen pour détacher le frein à ressort est actionné, la butée s'applique contre le boîtier de frein (1).

6. Dispositif de freinage selon l'une quelconque des revendications 1 à 5, **caractérisé en ce que** le moyen pour détacher le frein à ressort peut être actionné par rotation des barres (8) autour de leur axe longitudinal, de préférence d'une valeur angulaire d'environ 270 degrés.

7. Dispositif de freinage selon l'une quelconque des revendications 1 à 6, **caractérisé en ce que** les barres (8) sont connectées à chaque fois au corps de freinage (4) pendant le fonctionnement du dispositif de freinage.

8. Dispositif de freinage selon l'une quelconque des revendications 1 à 7, **caractérisé en ce que** les barres (8) présentent chacune une portion de préhension (11) qui est au moins partiellement espacée de l'axe longitudinal de la barre respective (8).

9. Dispositif de freinage selon l'une quelconque des revendications 1 à 8, **caractérisé en ce que** l'on prévoit au moins deux barres (8) dont les portions de préhension (11) peuvent être connectées au moyen d'un élément de fixation de telle sorte qu'une rotation des barres (8) autour de leur axe longitudinal soit empêchée.

10. Dispositif de freinage selon l'une quelconque des revendications 1 à 9, **caractérisé en ce que** lorsque le moyen pour détacher le frein à ressort n'est pas actionné, par rapport à une vue dans la direction d'observation axiale, les portions de préhension (11) sont disposées à l'intérieur du contour extérieur du boîtier de frein (1).

11. Dispositif de freinage selon l'une quelconque des revendications 1 à 10, **caractérisé en ce que** lorsque le moyen pour détacher le frein à ressort est actionné, par rapport à une vue dans la direction d'observation axiale, les portions de préhension (11) sont disposées à l'intérieur du contour extérieur du boîtier de frein (1).
